(19) **Europäisches Patentamt**
**European Patent Office**
**Office européen des brevets**

(11) Publication number: **0 160 419**
**B1**

(12) # EUROPEAN PATENT SPECIFICATION

(45) Date of publication of patent specification: **04.07.90**

(51) Int. Cl.⁵: **G 01 L 1/22**

(21) Application number: **85302383.6**

(22) Date of filing: **04.04.85**

(54) Strain-gauged load cell and method of compensating the same.

(30) Priority: **09.04.84 JP 70480/84 u**

(43) Date of publication of application:
**06.11.85 Bulletin 85/45**

(45) Publication of the grant of the patent:
**04.07.90 Bulletin 90/27**

(84) Designated Contracting States:
**DE FR GB**

(56) References cited:
**EP-A-0 053 337**
**FR-A-2 024 557**
**US-A-4 146 673**

**TECHNISCHES MESSEN, vol. 50, no. 12, December 1983, pages 455-460, Munich, DE; W. ORT: "Sensoren mit Folien- und Dünnfilm-Dehnungsmessstreifen"**

(73) Proprietor: **TOKYO ELECTRIC CO., LTD.**
**6-13, 2-chome, Nakameguro**
**Meguro-ku Tokyo (JP)**

(72) Inventor: **Kitagawa, Tohru**
**63-5 Kamo**
**Mishima Shizuoka (JP)**
Inventor: **Sakamoto, Koichiro**
**248-8 Kawaragaya**
**Mishima Shizuoka (JP)**
Inventor: **Ushijima, Yasuhiro**
**13-2 Kiyozumi-cho**
**Mishima Shizuoka (JP)**

(74) Representative: **Evans, David Charles et al**
**F.J. CLEVELAND & COMPANY 40-43, Chancery Lane**
**London, WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention relates to load cells such as used in bridges in which strain gauge resistors, and electrical connections thereto are formed in a laminate by utilizing thin film forming techniques. The invention also includes a method of compensating such load cells.

Heretofore, in a load cell of this type has included a number, typically four, strain gauge resistor portions, electrical connecting portions for the connection of such resistor portions with measuring means and compensating means to allow for compensation of bridge balance. These components may be formed as thin metal films on an insulated backing film formed on one side of a structural beam, and the thin metal films constituting the compensating means are trimmed in order to adjust them after assembly. The trimming is usually carried out by machining using a cutter; this trimming operation suffers from the drawback that it results in damage to the underlying insulation backing film, which being poor in the workability may well result in defective insulation. In the case where the thin metal films are coated with a protecting film, trimming has also to be carried out also to the protecting film which may result in a deterioration of the workability and the performance of the insulation layers of both backing layer and protective coating.

European Application A-O 05337 discloses a load cell which consists of a body member having an insulating film deposited on a surface thereof, load cell elements in the form of a resistive metal film deposited on the insulating film and on top of that a further insulating film.

In the preferred method the metal film is photo etched in order to give it the desired shape and values, and thereafter the insulating resin is formed over the pattern of resistance.

In an alternative form a ladder structure is provided which can be selectively ruptured to provide fine adjustment.

In each of these examples the method of adjustment is fairly complex and yet crude, and provides risk that the underlying layer may be damaged in the case of the ladder structure through mechanical contact and in the case of the photo etching method, because the overlying protective film has not yet been applied.

This invention seeks to overcome the problem encountered in this European Application where the underlying layers may be damaged.

Accordingly the invention is characterised in that it provides a method of forming a load cell which method comprises forming a laminate of thin metal films on an insulating backing sheet, etching or otherwise removing said films on said laminate to form strain gauge resistor portions, compensating portions and connector leads therefor, forming a protective film over said metal films, characterised in that the protective film is of a pigmented material which is capable of easily absorbing a laser beam and that trimming is effected by directing a laser beam on to the surface of the absorbent protective film causing the material in contact therewith to be heated to a high temperature and to vaporise.

The problem the present invention overcomes therefore is to enable trimming to take place with precision and without risk of damage to the underlying insulation layer. It is very important to avoid damage to the underlying layer during trimming because this results in a load cell of greater long-term reliability. Recognition of this fact is an essential aspect of the invention.

Trimming is achieved by applying laser energy to the overlying insulation layer which in turn causes the metal deposit underneath to vaporise where required. This minimises risk of damage to the underlying insulation layer. A further advantage is that production can be simplified because trimming can be left until after all three layers have been applied.

Risk of damage to the underlying layer is further minimised if the underlying layer is transparent and therefore any risk of it itself absorbing laser energy is minimised.

Technisches Messen 50 Vol. 50, No: 12, December 1983, pages 455—460, is a generalised disclosure that resistance trimming of load cells can be by laser, but the disclosure is very meagre and no mention is made of a three layer system or of solving the problem of avoiding damage to the underlying layer, or of the particular method where laser energy is applied to an overlying pigmented layer.

French Application No: 2 024 557 discloses a method of adjusting resistors using a laser beam, however no mention is made of the use of this technique for the construction of load cells, nor that it might solve the particular problem of avoiding damage to the insulating carrier layer which a load cell has to have.

Following is a description by way of example only and with reference to the accompanying drawing of methods of carrying the invention into effect.

In the drawings:

Figure 1 is a side elevational view of a beam showing one embodiment according to this invention.

Figure 2 is an enlarged side elevational view for the laminated state of metal thin films, an insulation film and a protection film.

Figure 3 is a plan view showing the pattern of a bridge circuit.

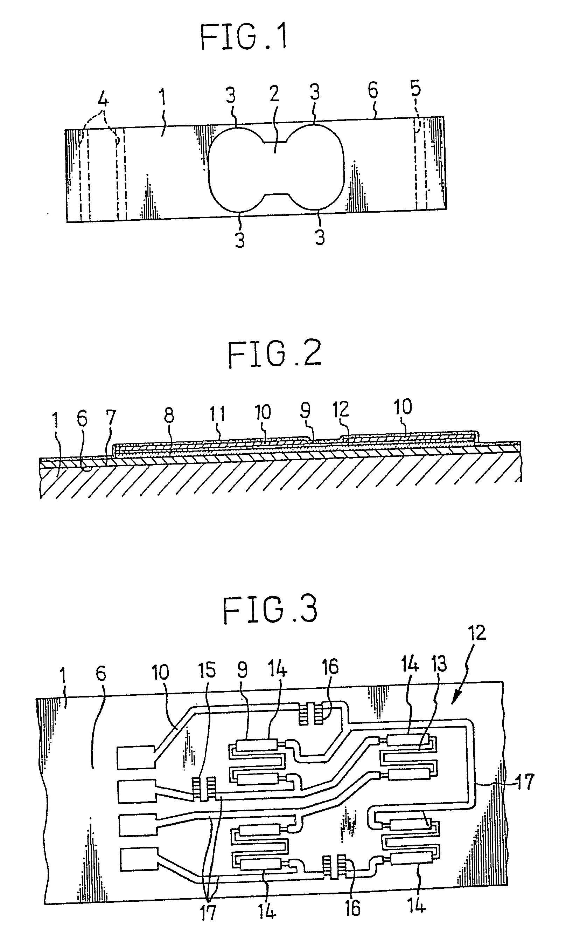

The invention will now be described referring to one embodiment in conjunction with the drawings. A structural beam 1 is prepared by machining stainless steel or high strength aluminium material. The beam 1 is formed with an opening 2 to provide a thin-walled strain-causing portion 3 with at least four strain positions as shown in Figure 1, and further formed with mounting holes 4 to the base of a balance beam (not illustrated) and a connection hole 5 for mounting a loading plate (not illustrated) of the balance beam.

The upper surface 6 of the beam 1 carries a strain gauge including an insulation backing film 7, secured to surface 6 a thin metal film 8 made of NiCrSi, a thin metal film 9 made of NiCrSi + Ti and a thin metal film 10 made of Au or the like successively deposited on backing film 7 by means of vapor deposition or sputtering.

Then, a pattern 12 as shown in Figure 3 is formed by selectively etching these thin metal films 8, 9 and 10 to define strain gauge resistor portions from the film 8 of about 0.1µ thickness. Four bridge balance compensating portions 14 and compensating portions 15 and 16 are made of the thin metal film 9 of about 10µ thickness and lead portions 17 are made of the thin metal film 10 of about 10µ thickness. The compensating portion 15 is used for the spar temperature compensation and the portion 16 is used for compensation of the bridge balance. The lead portions 17 serve to connect the strain gauge resistor portions 13 and the compensating portions 14. 15. 16.

After applying the etching in this way, a protective film 11 is applied to cover the thin metal films 8, 9 and 10. The protective film 11 is prepared by coating with a polyimide resin of about 10µ thickness, said resin incorporating a black pigment such as carbon or ferrite in order to facilitate the absorption of a laser beam during subsequent trimming. The insulation backing film 7 of about 10µ thickness is also made of a polyimide resin, but is not pigmented in order to provide a backing film of a colourless transparent material.

In such a structure, the compensating portions 15 and 16 is cut as required by the laser beams to adjust the value of the resistance thereof. In this case, corresponding to the cut portions of the compensating portion 15 and 16 the protective film 11 is also partially cut. The trimming is effected by directing a laser beam onto the surface of the protective film; the laser beam causes the material in contact therewith to be heated to a high temperature and to vaporise The vapors are removed using air or $N_2$ gas. While trimming is carried out in this way, there is no risk of damage to the insulation film 7 as in the case of the machining where damage may occur as a result of a slight error or deviation in the feed of the cutting blade. Furthermore, since the insulation film is colourless and transparent, it is not so readily damaged even if the laser beam is applied for a somewhat longer period than desirable. Thus trimming work can be carried out with extreme ease and any deterioration in the insulation layer 7 can also be substantially reduced or prevented. Furthermore, since the thin metal films 8, 9, 10 other than the trimmed portions are coated with a protective film 11, they are not corroded and can maintain stable characteristics for a long period of time.

## Claims

1. A method of forming a load cell which method comprises
   forming a laminate of thin metal films on an insulating backing sheet,
   etching or otherwise removing said films on said laminate to form strain gauge resistor portions, compensating portions and connector leads therefor,
   forming a protective film over said metal films, characterised in that the protective film is of a pigmented material which is capable of easily absorbing a laser beam and that trimming is effected by directing a laser beam on to the surface of the absorbent protective film causing the material in contact therewith to be heated to a high temperature and to vaporise.

2. A method according to claim 1 characterised in that the insulating backing sheet is of a colourless transparent material.

## Patentansprüche

1. Verfahren zur Herstellung einer Lastzelle mit den Arbeitsschritten: auf einer blattförmigen, isolierenden Unterlage eine Verbundfolie aus dünnen Metallfilmen auszubilden,
   zur Ausbildung von Widerstandsabschnitten und einer Kompensierung dienenden Abschnitten eines Dehnungsmessers und der für diese vorgesehenen Verbindungsleitungen die Filme auf der Verbundfolie zu ätzen oder anderweitig zu entfernen, und
   über den Metallfilmen einen Schutzfilm herzustellen, dadurch gekennzeichnet, daß als Schutzfilm ein pigmentiertes, einen Laserstrahl leicht absorbierendes Material verwendet wird, und daß eine Zurichtung in der Weise vorgenommen wird, daß ein Laserstrahl auf die Oberfläche des absorbierenden Schutzfilmes gerichtet wird, so daß das mit ihm in Berührung kommende Material auf eine hohe Temperatur erwärmt und verdampft wird.

2. Verfahren gemäß Anspruch 1, dadurch gekennzeichnet, daß als blattförmige, isolierende Unterlage ein farbloses, durchsichtiges Material verwendet wird.

## Revendications

1. Une méthode de formation d'une cellule de charge, méthode qui comprend:
   la formation d'un laminé de minces films métalliques sur une feuille support isolante,
   la gravure ou autre mode d'élimination desdits films sur ledit laminé pour former des parties de résistances à jauges de contrainte, des parties de compensation et des lignes de raccord pour celles-ci,
   la formation d'un film protecteur sur lesdits films métalliques, caractérisée en ce que le film protecteur est constitué d'un matériau pigmenté qui est capable d'absorber facilement un faisceau laser, et en ce qu'un ébavurage est effectué en dirigeant un faisceau laser sur la surface du film protecteur absorbant amenant le matériau au contact de celui-ci à être chauffé à une température élevée et à se vaporiser.

2. Une méthode selon la revendication 1, caractérisée en ce que la feuille support isolante est constituée d'un matériau transparent incolore.

# FIG.1

# FIG.2

# FIG.3